(19) Europäisches Patentamt
European Patent Office
Office européen des brevets

(11) **EP 1 495 220 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(21) Anmeldenummer: **04720002.7**

(22) Anmeldetag: **12.03.2004**

(51) Int Cl.:
***F02D 41/18*** *(2006.01)* ***G01F 1/76*** *(2006.01)*
***F02D 41/26*** *(2006.01)*

(86) Internationale Anmeldenummer:
**PCT/EP2004/002600**

(87) Internationale Veröffentlichungsnummer:
**WO 2004/090313 (21.10.2004 Gazette 2004/43)**

(54) **VERFAHREN ZUR STEUERUNG EINER BRENNKRAFTMASCHINE**

METHOD FOR CONTROLLING A COMBUSTION ENGINE

PROCEDE D'EXPLOITATION D'UN MOTEUR A COMBUSTION INTERNE

(84) Benannte Vertragsstaaten:
**DE FR GB IT**

(30) Priorität: **09.04.2003 DE 10316291**

(43) Veröffentlichungstag der Anmeldung:
**12.01.2005 Patentblatt 2005/02**

(73) Patentinhaber: **Continental Automotive GmbH**
**30165 Hannover (DE)**

(72) Erfinder:
- **DINGL, Jürgen**
**93055 Regensburg (DE)**
- **HENN, Michael**
**38165 Lehre (DE)**

(56) Entgegenhaltungen:

| | |
|---|---|
| **EP-A- 0 522 908** | **EP-A- 0 589 517** |
| **DE-A- 19 547 496** | **US-A- 5 698 779** |

- **PATENT ABSTRACTS OF JAPAN vol. 2002, no. 09, 4. September 2002 (2002-09-04) & JP 2002 155794 A (MIKUNI CORP), 31. Mai 2002 (2002-05-31)**

EP 1 495 220 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zur Steuerung einer Brennkraftmaschine, die einen Ansaugtrakt mit mindestens einem Zylinder, einem Abgastrakt und dem Zylinder zugeordnete Ein- und Auslassventile besitzt.

Bei Verbrennungskraftmaschinen kommt es beim Öffnen der Einlassventile zum Rückströmen von Restgas in den Ansaugtrakt. Die Frischluft zur Befüllung des Zylinders enthält also einen gewissen Anteil an Restgas, der bei der Berechnung der Frischluftmasse zu berücksichtigen ist.

Aus DE 198 44 085 C1 ist ein Verfahren zur Steuerung einer Brennkraftmaschine abhängig von einem Abgasdruck bekannt. Das Verfahren schließt den Schritt ein, einen Saugrohrdruck in dem Ansaugtrakt und den Luftmassenstrom in einen Zylinder modellgestützt zu berechnen. Für den mittleren Abgasdruck während der Ventilüberschneidung wird ein Korrekturfaktor vorgesehen, der abhängig von einem Schwerpunktwinkel der Ventilüberschneidung ist.

Aus EP 1 030 042 A2 ist ein Verfahren zur Bestimmung der Zylinderbefüllung bei ungedrosselten Verbrennungsmotoren bekannt. Bei diesem Verfahren wird berücksichtigt, dass das vor dem oberen Totpunkt in den Ansaugkanal zurückgeschobene Restgas nach dem Ansaugvorgang erst wieder angesaugt wird. Unter Annahme eines sogenannten Propfenmodells wird die vor dem oberen Totpunkt liegende Einlassventilfläche verdoppelt und von der maximalen Ventilöffnungsfläche abgezogen.

Der Erfindung liegt die Aufgabe zugrunde, ein Verfahren zum Steuern einer Brennkraftmaschine bereitzustellen, dass das in den Ansaugtrakt zurückströmende Restgas mit einfachen Mitteln zuverlässig bei der Bestimmung der Frischluftmasse berücksichtigt, insbesondere bei Ventilüberschneidung.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Bei dem erfindungsgemäßen Verfahren sind zwei kritische Werte für den Saugrohrabsolutdruck vorgesehen, bei denen sich die im Modell berechnete aufgenommene Frischluftmasse in ihrer Abhängigkeit ändert. Unterhalb des ersten und kleineren kritischen Werts wird die aufgenommene Luftmasse als proportional zu dem Saugrohrdruck bestimmt. Je höher der Saugrohrdruck um so größer ist die aufgenommene Frischluftmasse. Oberhalb des zweiten kritischen Saugrohrdruckwertes wird die aufgenommene Frischluftmasse erneut als proportional zu dem Saugrohrdruck angenommen. Allerdings wird in diesem Bereich zu dem sich aus der Proportionalität ergebenen Frischluftmasse noch ein konstanter Wert hinzuaddiert. Der Proportionalitätsfaktor kann hierbei gleich oder unterschiedlich sein. In einem Übergangsbereich zwischen den kritischen Werten wird die aufgenommene Frischluftmasse als nicht-linear abhängig von dem Saugrohrdruck modelliert. Bei dem erfindungsgemäßen Verfahren wird die Abhängigkeit der aufgenommenen Frischluftmasse von dem Saugrohrdruck in zwei lineare Abschnitte unterteilt, zwischen denen ein nicht-linearer Verlauf vorgesehen ist.

In einer bevorzugten Ausgestaltung wird die einströmende Luftstrommasse in dem Zwischenbereich abhängig von dem Quotienten aus Saugrohrdruck und Abgasgegendruck bestimmt. Dieser Abhängigkeit liegt die Überlegung zugrunde, dass einströmende Frischluft und ausströmendes Restgas sich an dem Einlassventil wie an einer Drosselstelle verhalten, so dass die Durchflussmenge im wesentlichen vom Druckquotienten abhängt. Bevorzugt wird der von dem Quotienten abhängige Wert mit einem von der Drehzahl und der Ventilüberschneidung abhängigen Faktor multipliziert.

Ferner hat es sich für den Übergangsbereich als vorteilhaft erwiesen, den nicht-linearen Verlauf abhängig von der Ventilüberschneidung und der Motordrehzahl zu bestimmen.

In einer bevorzugten Weiterführung des erfindungsgemäßen Verfahrens wird der Proportionalitätsfaktor zwischen einströmender Luftmasse und Saugrohrdruck von der Drehzahl und/oder der Position der Kurbelwelle beim Schließen der Einlassventile abhängig gemacht. Um die Verschiebung zwischen den linearen Bereichen zu modellieren, hat es sich in einer Weiterführung des erfindungsgemäßen Verfahrens als besonders vorteilhaft erwiesen, eine erste und zweite Konstante vorzusehen. Beide Konstanten sind von der Drehzahl abhängig, wobei die erste Konstante abhängig von einem Wert für die Ventilüberschneidung ist, während die zweite Konstante von der Position der Kurbelwelle beim Schließen der Auslassventile abhängt.

In einer bevorzugten Weiterführung des erfindungsgemäßen Verfahrens wird zusätzlich zur Bestimmung der in den Zylinder einströmenden Frischluftmasse ein von der Strömungsgeschwindigkeit in dem Saugrohr abhängiger Druckverlust berücksichtigt. Diesem Korrekturterm für die Luftmasse liegt die Überlegung zugrunde, dass eine mit großer Geschwindigkeit durch das Ansaugrohr strömende Luftmasse einen quadratisch von der Strömungsgeschwindigkeit wachsenden Druckverlust erfährt. Dieser Zusammenhang wird für ideale Flüssigkeiten durch die BERNOULLI-Gleichung beschrieben.

Zur Umsetzung des Verfahrens hat es sich als vorteilhaft erwiesen, den von der Strömungsgeschwindigkeit abhängigen Druckverlust abhängig von einer oder mehrere in einem Steuergerät abgelegten Variablen zu berücksichtigen. Bevorzugt wird hierbei die Geometrie, der Rohrwiderstand, Position einer Drallklappe, Ventilhub usw. berücksichtigt.

Nachfolgend wird das erfindungsgemäße Verfahren an einem bevorzugten Ausführungsbeispiel näher erläutert. Es zeigt:

Fig. 1 eine schematische Ansicht einer Brennkraftmaschine,

Fig. 2 Verlauf der in einem Zylinder einströmenden Luftmasse abhängig von dem Ansaugrohrdruck und

Fig. 3 ein Blockschaltbild zu dem erfindungsgemäßen Verfahren.

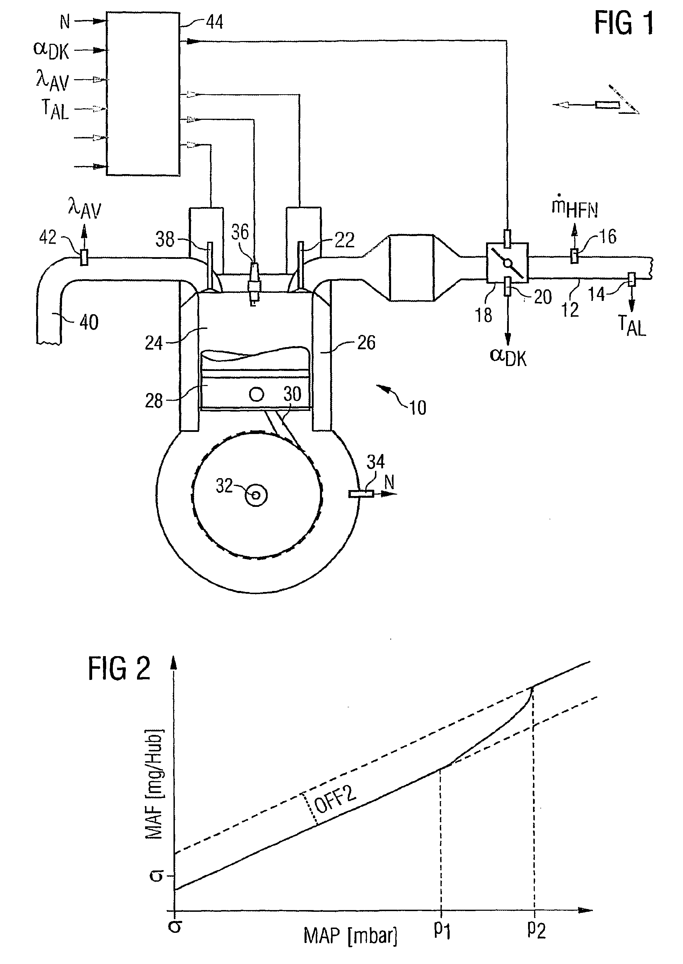

Figur 1 zeigt eine Brennkraftmaschine 10 mit einem beispielhaften Zylinder. Selbstverständlich kann das erfindungsgemäße Verfahren auch bei Brennkraftmaschinen mit mehr als einem Zylinder eingesetzt werden. Über einen Ansaugtrakt 12 wird Frischluft angesaugt. Von der Frischluft wird über einen Temperatursensor 14 die Temperatur erfasst. Die eintretende Luftmasse wird beispielsweise durch den Luftmassensensor 16 gemessen. Es ist ebenfalls möglich, statt eines Luftmassensensors einen Drucksensor als Lastsensor vorzusehen, der zwischen Drosselklappe und Einlassventil positioniert ist. Eine Drosselklappe 18 steuert den Luftmassenstrom in den Einlasstrakt. Zur besseren Regelung wird von einem Sensor 20 die Winkelposition der Drosselklappe gemessen.

Über ein Einlassventil 22 tritt die Frischluft in den Zylinderinnenraum 24 ein.

Der Zylinder 26 ist schematisch dargestellt und besitzt einen Kolben 28 mit einer Pleuelstange 30, die die Kurbelwelle 32 antreibt. Die Drehzahl der Kurbelwelle 32 wird von einem Drehzahlsensor 34 erfasst.

Die Kraftstoffeinspritzung ist in den Figuren nicht näher dargestellt. Der eingespritzte Kraftstoff wird über die Zündeinrichtung 36 gezündet. Nach der Zündung wird das Restgas über das Auslassventil 38 in den Abgastrakt 40 entlassen. Im Abgastrakt misst eine Lambdasonde 42 den im Abgas enthaltenen Sauerstoffgehalt.

Die Steuerung der Brennkraftmaschine erfolgt über eine Motorsteuerung 44. Als Eingangsgrößen liegen an der Motorsteuerung 44 die Drehzahl, der Drosselklappenwinkel, der Sauerstoffgehalt und die Umgebungstemperatur der angesaugten Frischluft an. Ferner liegt auch der gemessene Wert für die angesaugte Frischluft an.

Figur 2 zeigt den Modellansatz zu dem Luftmassenstrom in den Zylinder abhängig von dem Druck im Ansaugrohr. Ist ein Druck im Ansaugrohr kleiner als der erste kritische Druck P1, so wird der angesaugte Luftmassenstrom als proportional zu dem Ansaugdruck modelliert. Beachtet man die gesetzten Nullpunkte entlang der Achsen, so ist zu erkennen, dass ein Luftmassenstrom in den Zylindern erst ab einem gewissen Mindestansaugdruck einsetzt.

Oberhalb des zweiten kritischen Drucks P2 wird die angesaugte Luftmasse wieder als proportional zu dem Ansaugdruck bestimmt. Hierbei ist die Gerade, die dem Luftmassenstrom folgt, gegenüber der ursprünglichen Geraden um einen Betrag OFF2 verschoben. Die Geraden sind nicht notwendig parallel, sondern können auch unterschiedliche Steigungen aufweisen. Im Übergangsbereich zwischen dem Druck P1 und P2 liegt ein nicht-lineares Verhalten vor, das in Form einer PSI-Funktionalität vom Quotienten des Ansaugdrucks zu dem Abgasdruck abhängt. Der Wert des Offsets OFF2 hängt von der Drehzahl, der Ventilüberschneidung VO und der Quotient aus Saugrohrabsolutdruck und Abgasdruck ab.

Im Gegensatz zu bisherigen Berechnungen für die in den Zylinderinnenraum 24 einströmende Luftmasse berücksichtigt das erfindungsgemäße Verfahren, dass während der Überschneidungsphase zurückströmende Restgas in der Massenbilanz. Für diesen beim Öffnen des Einlassventils rückströmenden Anteil sind die Ventilsteuerzeiten, das Verhältnis zwischen Ansaugdruck- und Abgasgegendruck - dieser entspricht zu diesem Zeitpunkt etwa dem Brennraumdruck - und die Zeit während der diese Bedingungen herrschen von Bedeutung.

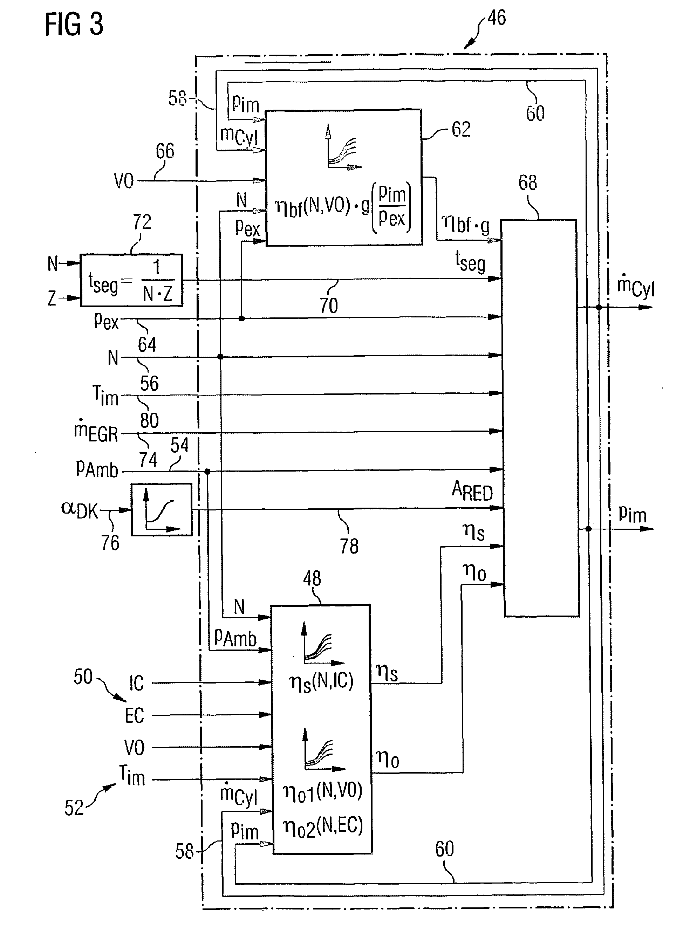

Figur 3 zeigt ein Blockschaltbild zu dem erfindungsgemäßen Verfahren. Bevor dieses Blockschaltbild näher erläutert wird, soll das dem Blockschaltbild zugrundeliegende physikalische Modell beschrieben werden.

Der Massenstrom in dem Zylinder ist allgemein eine Funktion der Drehzahl, des Drucks im Ansaugtrakt $P_{im}$, der Nockenwellenposition beim Schließen der Einlassventile ES und der Nockenwellenposition beim Schließen der Auslassventile AS. Um diese komplexe Abhängigkeit für die Steuerung der Brennkraftmaschine geeignet zu parametrisieren, hat sich folgender Ansatz als besonders vorteilhaft erwiesen:

$$\frac{dm_{cyl,0}}{dt} = \eta_s(N,ES)\cdot p_{im} - \eta_{o1}(N,VO) - \eta_{o2}(N,AS) + \eta_{bf}(N,VO)\cdot g\left(\frac{p_{im}}{p_{ex}}\right).$$

Bei diesem Ansatz stehen die Drehzahl N als Messgröße, der Saugrohrabsolutdruck $p_{im}$ und Abgasgegendruck $p_{ex}$ als Messgrößen zur Verfügung oder werden von der Motorsteuerung als Modellwert berechnet. Mit VO wird die Ventilüberschneidung bezeichnet, wobei die Nockenwellenposition gemessen oder im Modell berechnet sein kann.

Bei diesem Ansatz können die einzelnen Werte in Kennfeldern abgelegt werden und zur fortlaufenden Berechnung von $dm_{cyl,0}/dt$ sowie $P_{im}$ verwendet werden. Der Verlauf der Kennlinien wird für eine Brennkraftmaschine durch Rastervermessung bestimmt oder mittels gezielter Auswahl von bestimmten Betriebspunkten, beispielsweise mittels Designs of Experiments (DOE) ermittelt.

Bei der Berechnung der Steigung $\eta_S(N,ES)$ sowie der konstanten $\eta_{01}$ (N, VO) und $\eta_{02}(N,AS)$ werden im wesentlich die niedrigen bis mittleren Saugrohrabsolutdrücke berücksichtigt. Der dominierende Anteil für den Luftmassenstrom in dem Zylinder ergibt sich zu:

$$\frac{dm_{cyl,01}}{dt} = \eta_s(N,ES)\cdot p_{im} - \eta_{01}(N,VO) - \eta_{02}(N,AS)$$

Da bei geringen Saugrohrabsolutdrücken die Differenz zum Abgasgegendruck am größten ist, wird unter diesen Bedingungen die größte Menge an Restgas in den Ansaugkanal zurückgeschoben, wodurch im Ergebnis bis zum Ende des Ladungswechsels weniger Frischluft in den Brennraum gelangt.

Wesentlichen Einfluss auf die insgesamt in den Einlasskanal zurückgeschobene Masse hat neben den Ventilsteuerzeiten und dem Druckverhältnis, die zur Verfügung stehende Zeit. Somit lässt sich auch erklären, warum dieser Effekt gerade bei niedrigen Drehzahlen besonders ausgeprägt ist.

Mit bekannten Kennzahlen für Steigung und Verschiebung lässt sich die angesaugte Frischluft bis zu einer ersten kritischen Größe P1 gut berechnen. Mit steigendem Saugrohrdruck treten immer größere Abweichungen zwischen den tatsächlich vom Motor angesaugten und der oben beschriebenen linearen Abhängigkeit für die berechnete Frischluftladung auf. Ursache hierfür ist die mit zunehmenden Saugrohrabsolutdruck abfallende Druckdifferenz zwischen Saugrohr und Abgasstrang. Diese Abweichung wird durch den folgenden Ausdruck berücksichtigt:

$$\eta_{bf}(N,VO)\cdot g\left(\frac{p_{im}}{p_{ex}}\right).$$

Zur Festlegung der Größen wird der Luftmassenstrom in den Zylinder vermessen und eine Anpassung an den steigenden Saugrohrabsolutdruck vorgenommen.

Sind die Kennlinien einmal bestimmt und in einer Steuerung abgelegt, so kann fortlaufend der Ansaugdruck und der Luftmassenstrom in den Zylindern berechnet werden. Wie in Fig. 3 dargestellt, werden in einem Modul 48 der Steuerung 46 die Konstanten $\eta_{01}(N,VO)$ sowie $\eta_{02}(N,EC)$ ermittelt. Weiterhin wird auch die Steigung $\eta_s(N,IC)$ berechnet, wobei hier IC die Winkelposition beim Schließen des Einlassventils bezeichnet, EC die Winkelposition beim Schließen des Auslassventils und VO 66 die Ventilüberschneidung bezeichnet. Die Winkelposition zum Schließen von Ein- und Auslassventil, sowie die Winkelüberschneidung VO 66 liegen an dem Steuermodul 48 als Eingangsgrößen 50 an. Ferner liegt die Gastemperatur 52 aus dem Einlasstrakt an. Der Umgebungsdruck $P_{amb}$ 54 wird ebenso wie die Drehzahl 56 berücksichtigt. Auch die im letzten Verfahrensschritt bestimmten Werte für die einströmende Luftmasse 58 und den Druck im Einlassbereich 60 liegen an dem Modul 48 an. Zur Bestimmung des nicht-linearen Übergangsbereichs wird in dem Abschnitt 62 der vom Quotienten des Drucks im Einlass und im Auslasstrakt abhängige Term bestimmt. Hierzu liegt als Eingangsgröße der Druck im Auslasstrakt 64 sowie der vom Modell im vorangegangenen Schritt berechnete Druck im Einlasstrakt 60 an. Ebenfalls liegt der im vorangegangenen Verfahrensschritt berechnete Wert für den Massenstrom in den Zylinder 58 ebenfalls an der Einheit 62 an..

In dem Block 68 werden aus den so bestimmten Größen ein neuer Wert für den Luftmassenstrom in den Zylinder und für den Druck in dem Einlasstrakt berechnet. Hierbei wird zusätzlich die Zeitdauer für ein Segment 70 berücksichtigt, die in einem vorgelagerten Schritt 72 berechnet wird. Ferner wird, sofern eine Abgasrückführung vorhanden ist, auch der aus der Abgasrückführung stammende Massenstrom $dm_{EGR}/dt$ 74 berücksichtigt. Mit Hilfe des Drosselklappenwinkels 76 wird die reduzierte Querschnittsfläche 78 in dem Einlasstrakt bestimmt, so dass gerade bei großen Strömungsgeschwindigkeiten die geschwindigkeitsabhängigen Strömungsverluste berücksichtigt werden. Zur Bestimmung der Gasdichte in dem Einlasstrakt liegt an diesem auch die Gastemperatur 80 im Eingangstrakt an.

**Patentansprüche**

1. Verfahren zum Steuern einer Brennkraftmaschine mit einem Ansaugtakt, mindestens einem Zylinder, einem Abgastrakt (40) und Ein- und Auslassventil (32, 38), die dem Zylinder (26) zugeordnet sind, das zur Berechnung in den Zylinder einströmende Frischluftmasse (MAF) bis zu einem ersten kritischen Wert (P1) des Saugrohrdrucks (MAP) proportional zu dem Saugrohrdruck ist, ab einem zweiten kritischen Wert (P2) des Saugrohrdrucks proportional zu dem Saugrohrdruck zuzüglich einer Luftmassenkonstanten (OFF2) und in einem Übergangsbereich zwischen den beiden kritischen Werten für den Saugrohrdruck nicht-linear verläuft.

**2.** Verfahren nach Anspruch 1, **dadurch gekennzeichnet, dass** für den Übergangsbereich die einströmende Luftmasse zusätzlich abhängig vom Quotienten des Saugrohrdrucks und Abgasgegendrucks bestimmt wird.

**3.** Verfahren nach Anspruch 2, **dadurch gekennzeichnet, dass** der von dem Quotienten abhängige Wert mit einem von der Drehzahl (56) und der Ventilüberschneidung (66) abhängigen Faktor multipliziert wird.

**4.** Verfahren nach einem der Ansprüche 1 bis 3, **dadurch gekennzeichnet, dass** für den Übergangsbereich die einströmende Luftmasse abhängig von Ventilüberschneidung und Motordrehzahl bestimmt wird.

**5.** Verfahren nach einem der Ansprüche 1 bis 4, **dadurch gekennzeichnet, dass** der Proportionalitätsfaktor zwischen der einströmenden Frischluftmasse und dem Saugrohrdruck von der Drehzahl und/oder der Position der Kurbelwelle beim Schließen des Einlassventils (ES) abhängig ist.

**6.** Verfahren nach einem der Ansprüche 1 bis 5, **dadurch gekennzeichnet, dass** Luftmassenkonstante eine erste Konstante ($\eta_{01}$) aufweist, deren Wert von der Drehzahl (N) und einem Wert für die Ventilüberschneidung (VO) abhängt.

**7.** Verfahren nach Anspruch 6, **dadurch gekennzeichnet, dass** die Luftmassenkonstante eine zweite Konstante $\eta_{02}$) aufweist, deren Wert von der Drehzahl (N) und der Position der Kurbelwelle beim Schließen der Auslassventile (AS) abhängt.

**8.** Verfahren nach einem der Ansprüche 1 bis 7, **dadurch gekennzeichnet, dass** die für in den Zylinder einströmende Frischluftmasse (MAF) zusätzlich ein von der Strömungsgeschwindigkeit in dem Saugrohr abhängiger Druckverlust berücksichtigt wird.

**9.** Verfahren nach Anspruch 8, **dadurch gekennzeichnet, dass** der von der Strömungsgeschwindigkeit abhängige Druckverlust abhängig von einer oder mehreren in den Steuergeräten abgelegten Variablen bestimmt wird.

## Claims

**1.** Method for controlling an internal combustion engine with an intake duct, at least one cylinder, an exhaust gas duct (40) and inlet and exhaust valve (32, 38), assigned to the cylinder (26), which for calculation of fresh air mass (MAF) flowing into the cylinder up to a first critical value (P1) of the induction manifold pressure (MAP) is proportional to the induction manifold pressure, as of a second critical value (P2) of the induction manifold pressure is proportional to the induction manifold pressure plus an air mass constant (OFF2) and which runs non-linearly in a transitional area between the two critical values for the induction manifold pressure.

**2.** Method according to claim 1, **characterised in that** for the transitional area the in-flowing air mass additionally becomes dependent on the quotient of the induction manifold pressure and exhaust gas back pressure.

**3.** Method according to claim 2, **characterised in that** the value dependent on the quotient is multiplied by a factor dependent on the speed (56) and the valve overlap (66).

**4.** Method according to one of claims 1 to 3, **characterised in that** for the transitional area the in-flowing mass air is determined as a function of valve overlap and engine speed.

**5.** Method according to one of claims 1 to 4, **characterised in that** the proportionality factor between the in-flowing fresh air mass and the induction manifold pressure is dependent on the speed and/or the position of the crankshaft when the inlet valve (ES) is closed.

**6.** Method according to one of claims 1 to 5, **characterised in that** the air mass constant has a first constant ($\eta_{01}$), the value of which depends on the speed (N) and a value for the valve overlap (VO).

7. Method according to claim 6, **characterised in that** the air mass constant has a second constant ($\eta_{02}$), the value of which depends on the speed (N) and the position of the crankshaft when the exhaust valves (AS) are closed.

8. Method according to one of claims 1 to 7, **characterised in that** for the fresh air mass (MAF) flowing into the cylinder, a pressure loss dependent on the speed of flow in the induction manifold is additionally taken into account.

9. Method according to claim 8, **characterised in that** the pressure loss dependent on the speed of flow is determined as a function of one or more variables stored in the control devices.

**Revendications**

1. Procédé pour commander un moteur à combustion interne possédant un conduit d'admission, au moins un cylindre, un conduit d'échappement (40) et des soupapes d'admission et d'échappement (32, 38) qui sont associées au cylindre (26), qui, pour le calcul de la masse d'air neuf (MAF) entrant dans le cylindre, est proportionnel à la pression du tube d'admission jusqu'à une première valeur critique (P1) de la pression du tube d'admission (MAP), varie proportionnellement à la pression du tube d'admission majorée d'une constante de masse d'air (OFF2) à partir d'une deuxième valeur critique (P2) de la pression du tube d'admission, et varie selon une loi non linéaire dans une zone de transition entre les deux valeurs critiques de la pression du tube d'amission.

2. Procédé selon la revendication 1, **caractérisé en ce que**, pour la zone de transition, la masse d'air entrante est en supplément déterminée en fonction de quotients de la pression du tube d'admission et de la contre-pression des gaz d'échappement..

3. Procédé selon la revendication 2, **caractérisé en ce que** la valeur qui dépend du quotients est multipliée par un facteur qui dépend de la vitesse de rotation (56) et du chevauchement des soupapes (66).

4. Procédé selon une des revendications 1 à 3, **caractérisé en ce que**, pour la zone de transition, la masse d'air entrante est déterminée en fonction du chevauchement des soupapes et de la vitesse de rotation du moteur.

5. Procédé selon une des revendications 1 à 4, **caractérisé en ce que** le facteur de proportionnalité entre la masse d'air entrante et la pression du tube d'admission est fonction de la vitesse de rotation et/ou de la position du vilebrequin au moment de la fermeture de la soupape d'admission (ES).

6. Procédé selon une des revendications 1 à 5, **caractérisé en ce que** la constante de masse d'air comprend une première constante ($\eta_{01}$) dont la valeur est fonction de la vitesse de rotation (N) et d'une valeur pour le chevauchement des soupapes (VO).

7. Procédé selon la revendication 6, **caractérisé en ce que** la constante de masse d'air comprend une deuxième constante ($n_{02}$) dont la valeur dépend de la vitesse de rotation (N) et de la position du vilebrequin au moment de la fermeture des soupapes d'échappement (AS).

8. Procédé selon une des revendications 1 à 7, **caractérisé en ce que**, pour la masse d'air neuf (MAF.) entrant dans le cylindre, on prend en supplément en compte une perte de pression qui est fonction de la vitesse d'écoulement dans le tube d'admission.

9. Procédé selon la revendication 8, **caractérisé en ce que** la perte de pression qui est fonction de la vitesse de l'écoulement est déterminée en fonction d'une ou de plusieurs variables enregistrées dans les appareils de commande.

FIG 1

MAF [mg/Hub]
OFF2
σ
σ
MAP [mbar]
p1
p2

FIG 2

FIG 3
46
58
pim
mCyl
60
62
66
VO
N
pex
ηbf(N,VO) · g(pim/pex)
68
ηbf · g
72
N
Z
tseg = 1/(N·Z)
tseg
70
ṁCyl
pex
64
N
56
Tim
80
ṁEGR
74
54
pAmb
αDK
ARED
76
78
ηs
ηo
pim
48
N
pAmb
50
IC
EC
VO
Tim
52
ηs(N,IC)
ηs
ηo
ṁCyl
ηo1(N,VO)
pim
ηo2(N,EC)
58
60

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19844085 C1
- EP 1030042 A2